Europäisches Patentamt

European Patent Office

Office européen des brevets

(11) Publication number: **0 168 118**
**B1**

## EUROPEAN PATENT SPECIFICATION

(45) Date of publication of patent specification: **07.06.89**

(51) Int. Cl.⁴: **A 23 C 19/16**, A 23 C 19/097

(21) Application number: **85201192.3**

(22) Date of filing: **12.07.85**

(54) A method of preparing an article of food on the basis of cheese.

(30) Priority: **13.07.84 NL 8402229**

(43) Date of publication of application:
**15.01.86 Bulletin 86/03**

(45) Publication of the grant of the patent:
**07.06.89 Bulletin 89/23**

(84) Designated Contracting States:
**BE DE FR GB IT LU NL**

(56) References cited:
**US-A-3 993 786**
**US-A-4 000 324**

**PATENTS ABSTRACTS OF JAPAN, vol. 5, no. 128 (C-67)800r, 18th August 1981; & JP-A-56 64766 (HAYASHIKANE SANGYO K.K.) 02-06-1981**
**Idem**

**The file contains technical information submitted after the application was filed and not included in this specification**

(73) Proprietor: **Coöperatieve Melkproductenbedrijven Noord-Nederland B.A.**
**Poolsterweg 1**
**NL-8938 AN Leeuwarden (NL)**

(72) Inventor: **Mes, Petrus Jozef Maria**
**Herenweg 29**
**NL-1715 EG Spanbroek (NL)**

(74) Representative: **Smulders, Theodorus A.H.J., Ir. et al**
**Vereenigde Octrooibureaux Nieuwe Parklaan 107**
**NL-2587 BP 's-Gravenhage (NL)**

(56) References cited:
**U. GRÜNINGER: "Alles over kaas", 1977, pages 112,118,203,113, Luitingh, Laren, NL;**
**MICROBIOLOGY ABSTRACTS, section A, INDUSTRIAL AND APPLIED MICROBIOLOGY, vol. 8, no. 5, May 1973, page 26, abstract no. 8A3356; M. PETTINAU et al.: "Practical possibilities of freezing soft cheeses made from sheep's milk"**

Courier Press, Leamington Spa, England.

(56) References cited:
**R.J. COURTINE: "Nouveau Larousse
Gastronomique", 1967, 3rd edition, page 368,
Librairie Larousse, Paris, FR;
Käser-Verordnung**

# Description

This invention relates to a method of preparing an article of food on the basis of cheese, in which a cheese-containing starting product is provided with an edible coating, optionally deep-fried, deep-frozen, and heated prior to use.

A similar method is disclosed in US patent 4,000,324. In this prior method, a slice of cheese is put on a slice of bread, whereafter the resulting sandwich is provided with an edible coating. The resulting product can be fried in oil, while c.q. and the bread thus provided with a coating absorbs less fat. The patent describes that after frying the product can be frozen and re-heated prior to consumption.

It is known that when cheese or processed cheese is subjected to a deep freeze treatment, the product has, after defrosting, become less palatable. The fact is that the deep freeze treatment causes both segregation (loose moisture) and destabilization in the cheese. The result is that, among deep-frozen snack articles, one will look in vain for snacks on the basis of cheese or processed cheese and for snacks in which cheese forms an integral part.

In the known method described above, the starting product is a combination in which there is a direct contact between bread and cheese. The moisture separated from the cheese during freezing is irreversibly absorbed by the bread. As a result, the destabilized cheese has acquired a sandy structure, and highly deteriorated in taste characteristics.

According to the present invention, the starting product is a slice of cheese or a combination of a plurality of slices of cheese, which cheese is a hard cheese, a semi-hard cheese or a processed cheese, which slice or which combination is surrounded by a breading layer as an edible coating.

There is thus prepared an excellent cheese snack, while the disadvantages of the known method do not occur and, in particular, the taste characteristics of the cheese are retained.

In the method according to this invention, the coating applied can be frozen together with the cheese without any further treatment, but to realize better adherence, it may be subjected to a heat treatment such as a deep frying treatment prior to freezing.

In a preferred embodiment of the invention, deep freezing should be effected at a temperature lower than −30°C, and heating takes place at a temperature of at least 100°C. A particularly tasty product is obtained when an edible powder, for example, cheese powder, paprika powder and the like, is incorporated in the coating.

It has been found that the invention need not be limited to hard, semi-hard or processed cheese alone, but that a combination of cheese or processed cheese and meat also leads to an excellent product.

Accordingly, in a preferred embodiment of the method according to this invention, the starting product is a combination of two slices of cheese with a slice of meat, in particular ham, between them.

The invention also offers the possibility of combining cheese or processed cheese in several flavours, and processing these as a combination.

The invention is illustrated in and by the following examples.

Example I

A slice of processed cheese of 100 g was provided in known manner with a breading layer and subsequently deep frozen at a temperature of −38°C.

After storage for a certain time at −15°C the process-cheese snack thus prepared was heated at a temperature of 200°C by means of a deep frying treatment. A product of excellent quality resulted, as regards both appearance and taste. There turned out to be no segregation and destabilization, which translated organoleptically into an extremely tasty product.

Example II

A rectangular slice of cheddar cheese was coated twice with a lightly beaten egg and bread crumbs. The coating was quickly seared in deep fat at 200°C. The coated cheese was subsequently deep frozen until the cheese had reached a temperature of −18°C. After two months' storage at a temperature of at least −12°C, the frozen and coated slice of cheese was directly fried with hot butter in a frying pan until the cheese in the brown crust began to become soft. This produced a tasty product.

Example III

The starting product was two slices of process cheese of 40 g and a slice of ham of 20 g, sandwiched between the slices of cheese. After breading and deep freezing at a temperature of −40°C the snack was heated at a temperature of 190°C by deep frying, which led to a product having excellent properties.

Example IV

The procedure of Example I was followed, starting from two slices of process cheese of 50 g each, respectively having a ham flavour and a paprika flavour.

Example V

The procedure of Example I was followed, with the starting product being 100 g Gouda cheese, with Gouda cheese powder being incorporated in the breading layer.

# Claims

1. A method of preparing an article of food on the basis of cheese, in which a cheese-containing starting product is provided with an edible coating, optionally deep-fried, deep-frozen, and heated prior to use, characterized in that the starting product is a slice of cheese or a combination of a plurality of slices of cheese, which cheese is a hard cheese, a semi-hard cheese or a processed cheese, and which slice or which combination is surrounded by a breading layer as an edible coating.

2. A method according to claim 1, characterized in that the starting product is a combination of two slices of said cheese with a slice of meat, in particular ham, between them.

3. A method according to either of claims 1 and 2, characterized in that an edible powder is included in said coating.

4. A method according to any of claims 1—3, characterized by deep freezing at a temperature lower than −30°C.

## Patentansprüche

1. Verfahren für die Zubereitung eines Lebensmittels auf der Basis von Käse, in welchem ein Käse enthaltendes Ausgangsprodukt mit einem eßbaren Überzug zur Verfügung gestellt wird, gegebenenfalls durchgebraten tiefgefroren, und erhitzt vor Verwendung, dadurch gekennzeichnet, daß das Ausgangsprodukt eine Käsescheibe ist oder eine Kombination von einer Mehrzahl an Käsescheiben, wobei der Käse ein Hartkäse, ein halbharter Käse oder ein Schmelzkäse ist und wobei die Scheibe oder wobei die Kombination von einem brotarigen Belag als eßbarer Überzug umgeben ist.

2. Verfahren gemäß Anspruch 1, dadurch gekennzeichnet, daß das Ausgangsprodukt eine Kombination aus zwei Scheiben des erwähnten Käses mit einer Scheibe Fleisch, insbesondere Schinken, zwischen ihnen ist.

3. Verfahren gemäß einem der Ansprüche 1 und 2, dadurch gekennzeichnet, daß ein eßbares Puder in dem erwähnten Überzug enthalten ist.

4. Verfahren nach einem der Ansprüche 1—3, dadurch gekennzeichnet, daß bei einer Temperatur von unter −30°C tiefgefroren wird.

## Revendications

1. Procédé de préparation d'un article d'alimentation à base de fromage, dans lequel un produit de départ contenant du fromage est muni d'un revêtement comestible, éventuellement cuit dans de la friture, congelé et chauffé avant usage, caractérisé en ce que le produit de départ est une tranche de fromage ou une combinaison de plusieurs tranches de fromage, ledit fromage étant un fromage dur, un fromage semi-dur ou un fromage traité, et ladite tranche ou ladite combinaison étant enrobée d'une couche de panure en tant que revêtement comestible.

2. Procédé conforme à la revendication 1, caractérisé en ce que le produit de départ est une combinaison de deux tranches dudit fromage avec, entre elles, une tranche de viande, en particulier de jambon.

3. Procédé conforme à l'une ou l'autre des revendications 1 et 2, caractérisé en ce qu'une poudre comestible est incluse dans ledit revêtement.

4. Procédé conforme à l'une quelconque des revendications 1 à 3, caractérisé en ce que l'on effectue une congélation à une température inférieure à −30°C.